# EUROPÄISCHE PATENTSCHRIFT

(11) **EP 2 385 907 B1**
(45) Veröffentlichungstag und Bekanntmachung des Hinweises auf die Patenterteilung: **10.01.2018**
(21) Anmeldenummer: 09799051.9
(22) Anmeldetag: 27.11.2009
(51) Int. Cl.: F24F 13/02, B60H 1/00, B60L 3/00, H01M 8/04029, B60H 1/32, B60L 11/18, H01M 10/625, H01M 10/663, H01M 10/613, H01M 10/659

(54) **VORRICHTUNG ZUM ENERGIEMANAGEMENT EINES FAHRZEUGS**
DEVICE FOR THE ENERGY MANAGEMENT OF A VEHICLE
DISPOSITIF POUR LA GESTION ÉNERGÉTIQUE D'UN VÉHICULE

(30) Priorität: 09.01.2009 DE 102009000115
(43) Veröffentlichungstag der Anmeldung: 16.11.2011
(73) Patentinhaber: Robert Bosch GmbH, 70442 Stuttgart (DE)
(72) Erfinder: NORDEN, Roland, 71706 Markgroeningen (DE)
(86) Internationale Anmeldenummer: PCT/EP2009/065950
(87) Internationale Veröffentlichungsnummer: WO 2010/079007

(56) Entgegenhaltungen:
- DE-A1- 10 253 707
- FR-A- 2 820 369
- FR-A- 2 883 928
- US-A- 5 507 153
- US-A1- 2006 259 219

## Beschreibung

Die Erfindung betrifft eine Vorrichtung zum Energiemanagement eines Fahrzeugs.

### Stand der Technik

Bedingt durch die aktuelle CO₂-Klimadebatte und steigende Rohstoffpreise für fossile Brennstoffe ist die Kraftfahrzeugindustrie bemüht, den Kraftstoffverbrauch von Fahrzeugen zu senken.

Ein möglicher Weg zur Erreichung dieses Ziels ist eine Elektrifizierung des Antriebsstrangs des Fahrzeugs zur Verbesserung der Wirkungsgradkette und zur Rückgewinnung von Energie. Möglichkeiten zur Umsetzung sind beispielsweise Start-Stopp-Fahrzeuge, Hybridfahrzeuge, Brennstoffzellenfahrzeuge und Elektrofahrzeuge.

Heutige Elektrofahrzeuge haben im Vergleich zu herkömmlichen Fahrzeugen mit Verbrennungsmotoren deutlich reduzierte Reichweiten, die beispielsweise im Bereich von nur 100 bis 150 Kilometern liegen. Um diesen heutigen Elektrofahrzeugen eine Weiterfahrt zu ermöglichen, bedarf es einer geeigneten Infrastruktur zum Laden sowie einer Ladedauer von mehreren Stunden.

Aus diesem Grund ist für Elektrofahrzeuge ein hoher Wirkungsgrad und eine Reduktion jeglicher Energieverluste wünschenswert. Maßnahmen, welche die Reichweite des Fahrzeugs erhöhen und eine Reduktion der Kapazität der teuren Traktionsbatterie ermöglichen, sind erforderlich. Aber auch für andere Fahrzeugtypen ist eine hohe Energieeffizienz vorteilhaft.

Fahrzeuge mit elektrifiziertem Antriebsstrang besitzen eine Traktionsbatterie. Diese muss in Temperaturbereichen betrieben werden, die unterhalb von 40° C liegen. In heißen Klimazonen ist folglich bei derartigen Fahrzeugen eine Kopplung mit dem Kältekreislauf der Klimaanlage des jeweiligen Fahrzeugs notwendig.
Neuere Fahrzeug mit Start-Stopp-Funktion sind typischerweise mit elektrisch betriebenen Klimakompressoren ausgerüstet, um im Bedarfsfall auch während Stopps des Verbrennungsmotors eine Klimatisierung der Fahrgastzelle und der Traktionsbatterie gewährleisten zu können.
Es wurde ferner bereits vorgeschlagen, einen thermischen Speicher zu verwenden, um den Energiebedarf eines Fahrzeugs während kurzer Stoppphasen decken zu können. DE 102 53 707 offenbart eine Vorrichtung nach dem Oberbegriff des Anspruchs 1.

### Vorteile der Erfindung

Eine Vorrichtung zum Energiemanagement eines Fahrzeugs mit den im Anspruch 1 angegebenen Merkmalen weist demgegenüber mehrere Vorteile auf. Zum einen wird die Gesamtenergieeffizienz des Fahrzeugs erhöht. Dies resultiert in einer Erhöhung der Reichweite des Fahrzeugs bzw. in einer Reduzierung der Kapazität der Fahrzeugbatterie. Damit verbunden ist auch eine Kostenreduktion. Des Weiteren wird aufgrund der Verwendung eines mechanisch angetriebenen Klimakompressors anstelle eines elektrisch angetriebenen Klimakompressors eine einfachere und robustere Vorrichtung bereitgestellt. Der Einsatz eines thermischen Speichers anstelle eines elektrischen Batteriespeichers als Energiespeicher zur Klimatisierung ist von Vorteil, da ein thermischer Speicher kostengünstiger ist und zudem nahezu keinen Alterungseffekten unterliegt. Des Weiteren sind mechanisch angetriebene Klimakompressoren aufgrund einer Herstellbarkeit hoher Stückzahlen und einer geringeren Anzahl von Bauelementen deutlich kostengünstiger und leichter. Ferner werden bekannte elektrische Klimakompressoren typischerweise als Hochspannungskompressoren ausgelegt. Durch den Einsatz eines mechanischen Klimakompressors erhöhen sich die Sicherheit und die Möglichkeiten eines Einbaus innerhalb der Unfall-Deformationszonen des jeweiligen Fahrzeugs.

Weitere vorteilhafte Eigenschaften der Erfindung ergeben sich aus deren beispielhafter Erläuterung anhand der Figuren.

### Zeichnung

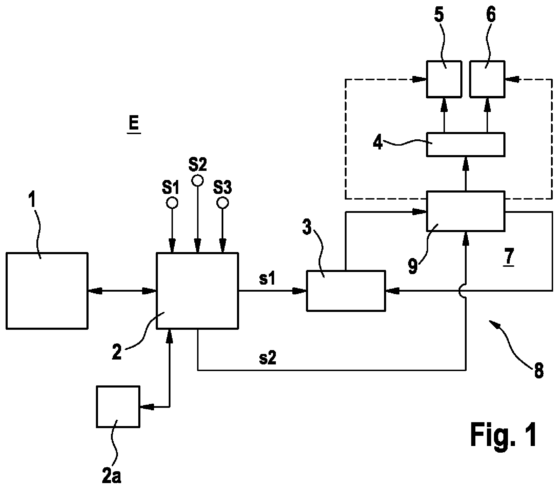

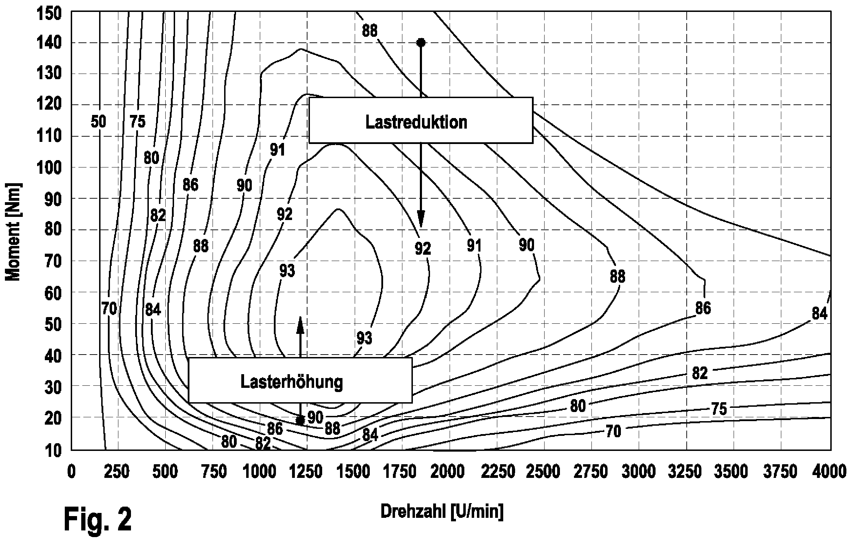

Die Figur 1 zeigt ein Blockdiagramm einer Vorrichtung zum Energiemanagement eines Fahrzeugs. Die Figur 2 zeigt ein Diagramm zur Veranschaulichung einer Betriebspunktverschiebung im Wirkungsgradkennfeld einer elektrischen Maschine.

### Beschreibung

Die Figur 1 zeigt ein Blockdiagramm einer Vorrichtung zum Energiemanagement eines Fahrzeugs. Bei diesem Fahrzeug handelt es sich vorzugsweise um ein Elektrofahrzeug. Eine Vorrichtung zum Energiemanagement gemäß der vorliegenden Erfindung kann aber auch bei Fahrzeugen mit Brennkraftmaschinen, Fahrzeugen mit Start-Stopp-Funktionalität, Hybridfahrzeugen, Plug-In-Hybridfahrzeugen und Brennstoffzellenfahrzeugen verwendet werden.

Das in der Figur 1 dargestellte Elektrofahrzeug E weist eine Vorrichtung zum Energiemanagement auf, zu welcher ein Controller 2, ein Speicher 2a, Sensoren S1, S2 und S3, eine Klimaanlage 8 mit einem Kältemittelkreislauf 7, in welchem ein mechanisch mit dem Antriebsstrang gekoppelter Klimakompressor 3, ein Verdampfer 9 und ein thermischer Speicher 4 vorgesehen sind, und das Antriebsstrang-Energiemanagement 1 des Elektrofahrzeugs gehören.

Des Weiteren sind in der Figur 1 die Traktionsbatterie 5 und die Fahrgastzelle 6 des Elektrofahrzeugs gezeigt.

Der Controller 2 steht in bidirektionaler Verbindung mit dem Antriebsstrang-Energiemanagement 1. Weiterhin ist er mit den Sensoren S1, S2 und S3 verbunden und empfängt von diesen bereitgestellte Sensorsignale. Diese Sensorsignale enthalten Informationen über thermische Parameter. Beispielsweise liefert der Sensor S1 Informationen über eine Temperatur des thermischen Speichers 4, der Sensor S2 Informationen über eine Temperatur der Traktionsbatterie 5 und der Sensor S3 Informationen über eine Temperatur des in der Figur 1 nicht gezeichneten Antriebsmotors des Fahrzeugs.

Die von den Sensoren S1, S2 und S3 gelieferten Informationen über thermische Parameter sowie weitere Fahrzeugparameter, die dem Controller 2 vom Antriebsstrang-Energiemanagement 1 des Fahrzeugs zugeführt werden, werden vom Controller 2 ausgewertet und in Steuersignale s1 und s2 umgesetzt. Mittels des Steuersignals s1 steuert der Controller 2 den mechanischen Klimakompressor 3, mittels des Steuersignals s2 den thermischen Speicher 4, beispielsweise über Ventile oder Luftklappen.

Vorzugsweise erfolgt die Auswertung der dem Controller 2 zugeführten Informationen unter Verwendung eines Alterungstemperaturberechnungsmodells der Traktionsbatterie 5, welches einen weiteren thermischen Parameter darstellt und in dem dem Controller 2 zugehörigen Speicher 2a hinterlegt ist.

Bei einer Vorrichtung gemäß der Erfindung erfolgt demnach ein Energiemanagement unter Verwendung von thermischen Parametern, die vom Controller 2 in Steuersignale für einen mechanischen Klimakompressor 3 und einen thermischen Speicher 4 umgesetzt werden, welche beide Bestandteile des Kältemittelkreislaufs 7 der Klimaanlage 8 des Fahrzeugs sind. Die im thermischen Speicher 4 gespeicherte Kälteenergie wird beispielsweise zur Kühlung der Traktionsbatterie 5 und zur Kühlung der Fahrgastzelle 6 des Fahrzeugs verwendet. Alternativ dazu kann der Traktionsbatterie 5 oder der Fahrgastzelle 6 auch Kälteenergie direkt vom mechanischen Klimakompressor 3 über den Verdampfer 9 zugeleitet werden, wie es in der Figur 1 mit gestrichelten Linien angedeutet ist.

Mittels der vorstehend beschriebenen Steuerung des mechanischen Klimakompressors 3 und des thermischen Speichers 4 durch den Controller 2 können beispielsweise folgende Maßnahmen zur Verbesserung der Energieeffizienz des Fahrzeugs umgesetzt werden:

Es kann eine Rekuperation von Bremsenergie erfolgen, indem die Bremsenergie des Fahrzeugs durch eine Erhöhung der Last des mechanischen Klimakompressors 3 in Kälteenergie umgesetzt wird. Diese Kälteenergie kann entweder unmittelbar zur Abkühlung der Traktionsbatterie 5 oder der Fahrgastzelle 6 verwendet werden oder zunächst im thermischen Speicher 4 zwischengespeichert und dann der Traktionsbatterie zu einem späteren Zeitpunkt zugeleitet werden.

Fahrzeuge mit elektrifiziertem Antriebsstrang speichern Bremsenergie typischerweise in elektrischer Form direkt in einer Batterie. Ist diese Batterie geladen, dann kann die Bremsenergie nicht mehr genutzt werden. Durch die vorstehend beschriebene Umwandlung der Bremsenergie in Kälteleistung ist auch bei geladener Batterie eine Nutzung der Bremsenergie weiterhin möglich. Dies ist insbesondere für Fahrzeuge mit kleiner Batteriekapazität von Vorteil. Des Weiteren ist dies von Vorteil, wenn lange Rekuperationsphasen auftreten, beispielsweise bei langen Bergabfahrten.

Eine Verbesserung der Energieeffizienz des Fahrzeugs wird durch eine Erhöhung oder Erniedrigung der Kompressorlast erreicht, wobei der Betriebspunkt einer elektrischen Maschine des Fahrzeugs zu einem Betriebspunkt mit besserem Wirkungsgrad verschoben wird. Möglich wird dies bei Antriebssträngen, welche eine Kopplung von Klimakompressor und elektrischer Maschine aufweisen. Die Grundfunktion ist in der Figur 2 veranschaulicht, in welcher das Wirkungsgradkennfeld einer elektrischen Maschine dargestellt ist. Dabei ist längs der Ordinate das Drehmoment der elektrischen Maschine und längs der Abszisse deren Drehzahl aufgetragen. Der nach oben gerichtete Pfeil veranschaulicht dabei eine Lasterhöhung, der nach unten gerichtete Pfeil eine Lastreduktion in Richtung der Bereiche besseren Wirkungsgrades.
Des Weiteren wird zur Verbesserung der Energieeffizienz der Wirkungsgrad der Klimatisierung des Fahrzeugs verbessert. Bei Einsatz eines elektrischen Klimakompressors zur Klimatisierung der Traktionsbatterie 5 oder der Fahrgastzelle 6 muss eine lange Wirkungsgradkette durchlaufen werden. Bei Verwendung einer Vorrichtung gemäß der Erfindung entfällt die Notwendigkeit elektrischer Energiewandlungen. Ferner erwärmt sich die Traktionsbatterie 5 bei einem Zwischenspeichern von elektrischer Energie, wodurch ein zusätzlicher Klimatisierungsbedarf der Traktionsbatterie entsteht. Durch den Einsatz einer Vorrichtung gemäß der Erfindung entsteht keine zusätzliche Wärme in der Batterie.
Eine direkte Nutzung der Brems- oder Antriebsenergie zur Kälteerzeugung mittels eines mechanischen Klimakompressors ohne Zwischenspeicherung im thermischen Speicher 4 hat stets einen verbesserten Wirkungsgrad. Aber auch im Falle einer Zwischenspeicherung der Kälteenergie im thermischen Speicher 4 liegt in der Regel eine bessere Wirkungsgradkette vor.

Ein weiterer Vorteil der Erfindung kann bei Fahrzeugen in Leichtbauweise erzielt werden, die einen hohen Klimatisierungsbedarf haben. Bei derartigen Fahrzeugen können Kompressorlasten auftreten, welche sich in der Größenordnung der Antriebsleistung des Fahrzeugs befinden. Durch den Controller 2 kann eine Kompressorsteuerung derart vorgenommen werden, dass einem Ruckeln im Antriebsstrang, welches beispielsweise bei Schaltvorgängen auftritt, gezielt entgegengewirkt wird.

Als thermischer Speicher 4 kann beispielsweise ein Latentwärmespeicher verwendet werden.

Anstelle einer Nutzung eines konventionellen Kältekreislaufs kann auch ein Kältekreislauf mit Wärmepumpenfunktion zur Wärmeerzeugung eingesetzt werden. Die Abwärme steht dann beispielsweise zum Erwärmen der Batterie oder der Fahrgastzelle zur Verfügung.

In der Figur 1 sind der Controller 2 und das Antriebsstrang-Energiemanagement 1 als getrennte Bauteile dargestellt. Alternativ dazu ist es auch möglich, das Antriebsstrang-Energiemanagement 1 und den Controller 2 in Form einer einzigen Baueinheit zu realisieren.

## Patentansprüche

1. Vorrichtung zum Energiemanagement eines Fahrzeugs, welche eine Klimaanlage und einen die Klimaanlage steuernden Controller aufweist, wobei die Klimaanlage (8) einen mechanisch mit dem Antriebsstrang gekoppelten Klimakompressor (3) und einen thermischen Speicher (4) aufweist, der Controller (2) zur Auswertung von Informationen über thermische Parameter des Fahrzeugs vorgesehen ist und der Controller (2) dem mechanischen Klimakompressor (3) durch Auswertung der Informationen über die thermischen Parameter ermittelte Steuersignale (51) bereitstellt, **dadurch gekennzeichnet, dass** der Controller (2) mittels der Steuersignale (S1) den Klimakompressor (3) derart steuert, dass kinetische Energie des Fahrzeugs durch Veränderung der Last des Klimakompressors (3) in bedarfsgerechte Kälteenergie umgesetzt wird und dass durch eine Erhöhung oder Erniedrigung der Kompressorlast der Betriebspunkt einer elektrischen Maschine des Fahrzeugs zu einem Betriebspunkt mit besserem Wirkungsgrad verschoben wird.

2. Vorrichtung nach Anspruch 1, **dadurch gekennzeichnet, dass** die vom Klimakompressor (3) bereitgestellte Kälteenergie unter Steuerung durch den Kontroller (2) im thermischen Speicher (4) zwischengespeichert und unter Steuerung durch den Controller (2) aus dem thermischen Speicher (4) an eine Traktionsbatterie (5) und/oder die Fahrgastzelle (6) des Fahrzeugs weitergeleitet wird.

3. Vorrichtung nach Anspruch 2, **dadurch gekennzeichnet, dass** die vom Klimakompressor (3) bereitgestellte Kälteenergie direkt an die Traktionsbatterie (5) oder die Fahrgastzelle (6) des Fahrzeugs weitergeleitet wird.

4. Vorrichtung nach einem der vorhergehenden Ansprüche, **dadurch gekennzeichnet, dass** der Controller (2) den Klimakompressors (3) derart steuert, dass einem Ruckeln im Antriebsstrang des Fahrzeugs entgegengewirkt wird.

5. Vorrichtung nach einem der vorhergehenden Ansprüche, **dadurch gekennzeichnet, dass** der thermische Speicher (4) ein Latentwärmespeicher ist

6. Vorrichtung nach einem der vorhergehenden Ansprüche, **dadurch gekennzeichnet, dass** der Kältemittelkreislauf nach dem Prinzip einer Wärmepumpe zur Erzeugung von Wärme in Kombination mit einem Wärmespeicher betreibbar ist.

7. Vorrichtung nach einem der vorhergehenden Ansprüche, **dadurch gekennzeichnet, dass** der Controller (2) mit dem Antriebsstrang-Energiemanagement (1) des Fahrzeugs verbunden ist und die Steuersignale in Abhängigkeit von Informationen bereitstellt, die ihm vom Antriebsstrang-Energiemanagement (1) zugeführt werden.

8. Vorrichtung nach Anspruch 9, **dadurch gekennzeichnet, dass** das Antriebsstrang-Energiemanagement (1) dem Controller (2) Informationen über die thermischen Parameter bereitstellt.

9. Vorrichtung nach einem der vorhergehenden Ansprüche, **dadurch gekennzeichnet, dass** sie Sensoren (S1,S2,S3) aufweist, die mit dem Controller (2) verbunden sind und dem Controller (2) Informationen über die thermischen Parameter bereitstellen.

10. Vorrichtung nach einem der vorhergehenden Ansprüche, **dadurch gekennzeichnet, dass** die thermischen Parameter Informationen über eine Temperatur des thermischen Speichers, eine Temperatur der Traktionsbatterie und/oder ein Alterungstemperaturberechnungsmodell der Traktionsbatterie umfassen.

11. Vorrichtung nach einem der vorhergehenden Ansprüche, **dadurch gekennzeichnet, dass** das Fahrzeug ein Elektrofahrzeug oder ein Hybridfahrzeug ist.

## Claims

1. Device for the energy management of a vehicle, which has an air-conditioning system and a controller which controls the air-conditioning system, wherein the air-conditioning system (8) has an air-conditioning compressor (3) which is coupled mechanically to the drive train, and a thermal accumulator (4), the controller (2) is provided for evaluating information about thermal parameters of the vehicle, and the controller (2) provides the mechanical air-conditioning compressor with control signals (51) which are determined by evaluating the information about the thermal parameters, **characterized in that** the controller (2) controls the air-conditioning compressor (3) by means of the control signals (S1) in such a way that kinetic energy of the vehicle is converted into demand-appropriate refrigeration energy by changing the load of the air-conditioning compressor (3), and **in that** the operating point of an electric machine of the vehicle is shifted to an operating point with better efficiency by increasing or reducing the compressor load.

2. Device according to Claim 1, **characterized in that** the refrigeration energy which is provided by the air-conditioning compressor (3) is buffered in the thermal accumulator (4) under control by the controller (2), and is forwarded to a traction battery (5) and/or the passenger compartment (6) of the vehicle from the thermal accumulator (4) under control by the controller (2).

3. Device according to Claim 2, **characterized in that** the refrigeration energy which is provided by the air-conditioning compressor (3) is forwarded directly to the traction battery (5) or the passenger compartment (6) of the vehicle.

4. Device according to one of the preceding claims, **characterized in that** the controller (2) controls the air-conditioning compressor (3) in such a way that shuddering in the drive train of the vehicle is counteracted.

5. Device according to one of the preceding claims, **characterized in that** the thermal accumulator (4) is a latent heat accumulator.

6. Device according to one of the preceding claims, **characterized in that** the refrigerant circuit can be operated according to the principle of a heat pump in order to generate heat in combination with a heat accumulator.

7. Device according to one of the preceding claims, **characterized in that** the controller (2) is connected to the drive train energy management system (1) of the vehicle, and the control signals are provided as a function of information which is fed to said controller (2) by the drive train energy management system (1).

8. Device according to Claim 9, **characterized in that** the drive train energy management system (1) provides the controller (2) with information about the thermal parameters.

9. Device according to one of the preceding claims, **characterized in that** said device has sensors (S1, S2, S3) which are connected to the controller (2) and provide the controller (2) with information about the thermal parameters.

10. Device according to one of the preceding claims, **characterized in that** the thermal parameters comprise information about a temperature of the thermal accumulator, a temperature of the traction battery and/or an ageing temperature calculation model of the traction battery.

11. Device according to one of the preceding claims, **characterized in that** the vehicle is an electric vehicle or a hybrid vehicle.

## Revendications

1. Dispositif de gestion de l'énergie d'un véhicule, comprenant une installation de climatisation et une unité de commande commandant l'installation de climatisation, dans lequel l'installation de climatisation (8) comprend un compresseur de climatisation (3) mécanique couplé à la chaîne cinématique et un accumulateur thermique (4), l'unité de commande (2) est prévue pour évaluer des informations concernant des paramètres thermiques du véhicule et l'unité de commande (2) fournit au compresseur de climatisation mécanique (3) des signaux de commande (51) déterminés par évaluation des informations concernant les paramètres thermiques, **caractérisé en ce que** l'unité de commande (2) commande le compresseur de climatisation (3) au moyen des signaux de commande (S1) de manière à ce que l'énergie cinétique du véhicule soit convertie en énergie de refroidissement en fonction des besoins par modification de la charge du compresseur de climatisation (3) et **en ce que** le point de fonctionnement d'une machine électrique du véhicule est décalé vers un point de fonctionnement correspondant à un meilleur rendement par augmentation ou abaissement de la charge du compresseur de climatisation.

2. Dispositif selon la revendication 1, **caractérisé en ce que** l'énergie de refroidissement fournie par le compresseur de climatisation (3) est accumulée de manière intermédiaire dans l'accumulateur thermique (4) au moyen d'une commande effectuée par l'unité de commande (2) et est réacheminée de l'accumulateur thermique (4) vers une batterie de traction (5) et/ou vers l'habitacle (6) du véhicule par une commande effectuée par l'unité de commande (2).

3. Dispositif selon la revendication 2, **caractérisé en ce que** l'énergie de refroidissement fournie par le compresseur de climatisation (3) est directement réacheminée vers la batterie de traction (5) ou vers l'habitacle (6) du véhicule.

4. Dispositif selon l'une quelconque des revendications précédentes, **caractérisé en ce que** l'unité de commande (2) commande le compresseur de climatisation (3) de manière à éviter les à-coups dans la chaîne cinématique du véhicule.

5. Dispositif selon l'une quelconque des revendications précédentes, **caractérisé en ce que** l'accumulateur thermique (4) est un accumulateur de chaleur latente.

6. Dispositif selon l'une quelconque des revendications précédentes, **caractérisé en ce que** le circuit de refroidissement peut être mis en fonctionnement selon le principe d'une pompe à chaleur afin de générer de la chaleur en association avec un accumulateur de chaleur.

7. Dispositif selon l'une quelconque des revendications précédentes, **caractérisé en ce que** l'unité de commande (2) est reliée à un élément de gestion d'énergie de chaîne cinématique (1) du véhicule et **en ce que** les signaux de commande sont fournis en fonction d'informations qui lui sont délivrées par l'élément de gestion d'énergie de chaîne cinématique (1).

8. Dispositif selon la revendication 9, **caractérisé en ce que** l'élément de gestion d'énergie de chaîne cinématique (1) fournit à l'unité de commande (2) des informations concernant les paramètres thermiques.

9. Dispositif selon l'une quelconque des revendications précédentes, **caractérisé en ce qu'**il comporte des capteurs (S1, S2, S3) qui sont reliés à l'unité de commande (2) et fournissent à l'unité de commande (2) des informations concernant les paramètres thermiques.

10. Dispositif selon l'une quelconque des revendications précédentes, **caractérisé en ce que** les paramètres thermiques comprennent des informations concernant une température de l'accumulateur thermique, une température de la batterie de traction et/ou un modèle de calcul de température de vieillissement de la batterie de traction.

11. Dispositif selon l'une quelconque des revendications précédentes, **caractérisé en ce que** le véhicule est un véhicule électrique ou hybride.
